Europäisches Patentamt

European Patent Office

Office européen des brevets

(19)

(11) EP 0 736 958 B1

(12) **EUROPÄISCHE PATENTSCHRIFT**

(45) Veröffentlichungstag und Bekanntmachung des Hinweises auf die Patenterteilung:
**14.07.1999 Patentblatt 1999/28**

(51) Int Cl.$^6$: **H02M 1/12**, H02M 3/158

(21) Anmeldenummer: **96200894.2**

(22) Anmeldetag: **02.04.1996**

(54) **Schaltungsanordnung zum Erzeugen einer galvanisch getrennten Ausgangsgleichspannung**

Circuit for generating a galvanically isolated DC output voltage

Circuit pour la génération d'une tension de sortie courant continu à isolement galvanique

(84) Benannte Vertragsstaaten:
**DE FR GB**

(30) Priorität: **07.04.1995 DE 19513065**

(43) Veröffentlichungstag der Anmeldung:
**09.10.1996 Patentblatt 1996/41**

(73) Patentinhaber:
• **Philips Patentverwaltung GmbH**
**22335 Hamburg (DE)**
Benannte Vertragsstaaten:
**DE**
• **Koninklijke Philips Electronics N.V.**
**5621 BA Eindhoven (NL)**
Benannte Vertragsstaaten:
**FR GB**

(72) Erfinder:
• **Albach, Manfred, Dr.**
**22335 Hamburg (DE)**
• **Dürbaum, Thomas, Dr.**
**22335 Hamburg (DE)**

(74) Vertreter: **Peters, Carl Heinrich, Dipl.-Ing. et al**
**Philips Patentverwaltung GmbH,**
**Röntgenstrasse 24**
**22335 Hamburg (DE)**

(56) Entgegenhaltungen:
**EP-A- 0 474 312          GB-A- 2 261 331**

## Beschreibung

Die Erfindung bezieht sich auf eine Schaltungsanordnung zum Erzeugen wenigstens einer Ausgangsgleichspannung aus einer wenigstens weitgehend sinusförmigen Eingangswechselspannung.

Aus der Monografie "Schaltnetzteile in der Praxis" von Otmar Kilgenstein (Siemens, 1990) sind derartige Schaltungsanordnungen im Prinzip bekannt. Darin wird eine sinusförmige Netzwechselspannung zunächst mit Hilfe eines Brückengleichrichters und eines Speicherkondensators in eine Gleichspannung umgewandelt, die dann als Eingangspannung für ein Schaltnetzteil dient, welches eine oder mehrere Ausgangsgleichspannungen erzeugt. Diese können zur Netzwechselspannung galvanisch getrennt oder mit ihr galvanisch verbunden sein. Ein wesentlicher Nachteil dieser bekannten Schaltungsanordnung liegt in der Erzeugung elektromagnetischer Störungen sowohl im Bereich der Schaltfrequenzen und ihrer Harmonischen, d. h. also bei relativ hohen Frequenzen, als auch im Bereich der Netzfrequenz, d.h. im Niederfrequenzbereich. Im letzteren macht sich insbesondere eine starke Verzerrung der dem Netz entnommenen Ströme sehr nachteilig bemerkbar.

Ein weiteres Problem, das bei Schaltnetzteilen der vorstehend erwähnten Art zu beachten ist, besteht im Auftreten von Schaltverlusten am Hochfrequenzschalter des Schaltnetzteils. Diese Schaltverluste, die mit Erhöhung der Schaltfrequenz zunehmen, führen zu einer unzulässigen thermischen Belastung insbesondere des Hochfrequenzschalters und sind ein Hindernis für eine Erhöhung der Schaltfrequenz über eine durch diese thermische Belastung gegebene Grenze hinaus. Eine Erhöhung der Schaltfrequenz ist aber andererseits für beispielsweise eine Verkleinerung der magnetischen Bauelemente des Schaltnetzteils sehr erwünscht.

Aus der EP-B1-0 223 315 ist eine Schaltungsanordnung zur Erzeugung einer Gleichspannung aus einer sinusförmigen Eingangsspannung bekannt, durch die die Harmonischen der Netzfrequenz verringert werden. Die bekannte Schaltungsanordnung umfaßt dazu ein Schaltnetzteil, betehend aus einer Diode, einer Spule, einem Kondensator und einem Transistor, das über einen Gleichrichter mit der im wesentlichen sinusförmigen Eingangsspannung beaufschlagt wird und dessen Elemente so angeordnet sind, daß im leitenden Zustand des Transistors die Diode gesperrt ist und der Spulenstrom zumindest über den Transistor fließt und im gesperrten Zustand über die Diode und eine Parallelschaltung aus einer Last und dem Kondensator. Dabei kann die Last ein (weiteres) Schaltnetzteil enthalten, über welches der Endverbraucher gespeist wird. Bei dieser Schaltungsanordnung ist somit ein nicht galvanisch trennendes Schaltnetzteil zwischen den Gleichrichter und den Kondensator geschaltet. Dieses (weitere) Schaltnetzteil ist bevorzugt als Hochsetzsteller ausgebildet, mit dem ein sinusförmiger Strom aus dem Netz entnommen werden kann und der gleichzeitig eine Spannung am Kondensator erzeugt, die höher ist als die Spitze der Netzwechselspannung. Daher kann das nachfolgende Schaltnetzteil innerhalb der Last, welches gegebenenfalls einen Transformator enthält, für die mittlere Ausgangsleistung dimensioniert werden. Da dieses (weitere) Schaltnetzteil mit einer hohen Eingangsspannung gespeist wird, sind die darin auftretenden Ströme und somit auch die zugehörigen ohmschen Verluste relativ gering. Allerdings ist dem somit verringerten Schaltungsaufwand für das (weitere) Schaltnetzteil der zusätzliche Aufwand für den Hochsetzsteller gegenzurechnen, der wie beschrieben im wesentlichen eine Spule, eine Freilaufdiode und einen hochfrequent betriebenen Schalter mit entsprechender Ansteuerschaltung umfaßt.

Aus der DE-OS 35 37 536 oder aus dem Aufsatz "Snubber Circuits: Theory, Design and Application" von Philip C. Todd, veröffentlicht im "Unitrode Switching Regulated Power Supply Design Seminar Manual" vom Mai 1993, sind Dämpfungsglieder (sogenannte snubber ober voltage clamps) bekannt, mit denen eine verlustbehaftete Dämpfung von Rückschwingimpulsen an Hochfrequenzschaltem vorgenommen werden kann. Derartige Schaltungen sind insbesondere für die Reduzierung von Hochfrequenzstörungen einsetzbar, da sie die Anstiegsgeschwindigkeit der Sperrspannung am Hochfrequenzschalter begrenzen. Je schneller nämlich die Spannung am Hochfrequenzschalter beim Umschalten in den gesperrten Zustand ansteigen kann, desto größer werden die kapazitiven Störströme, die in den stets vorhandenen parasitären Kapazitäten im Umfeld des Hochfrequenzschalters fließen, beispielsweise in einem mit einem Kühlkörper verbundenen Anschluß des Hochfrequenzschalters und Masse. Werden solche Störungen nicht von vornherein bedämpft, sind zu ihrer Unterdrückung gegebenenfalls aufwendige Netzfilter notwendig. Insbesondere können sich derartige Störungen bei Schaltnetzteilen in Monitoren oder Fernsehgeräten, jedoch auch in anderen vergleichbar empfindlichen Geräten auswirken, da sie hier z.B. als Bildstörungen sichtbar werden können.

Auch die beschriebenen Dämpfungsglieder stellen einen zusätzlichen Schaltungsaufwand dar. Besonders hoch wird der Schaltungsaufwand, wenn die beschriebenen, bekannten Maßnahmen zur Unterdrückung der niederfrequenten Störungen und der hochfrequenten Störungen gemeinsam in einer Stromversorgungsschaltung eingesetzt werden müssen.

Aus der EP-A-654 886, die nicht vorveröffentlicht ist, ist nun eine Schaltung bekannt, bei der mit geringem Schaltungsaufwand einerseits der Spannungsanstieg, d.h. die Anstiegsgeschwindigkeit der Spannung am Hochfrequenzschalter des Schaltnetzteils und damit Störungen und Schaltverluste bei hohen Frequenzen verringert werden und gleichzeitig ein möglichst weitgehend sinusförmiger Strom aus dem Netz entnommen wird, so daß die Oberwellen dieses Netzstromes und damit die niederfrequenten Störungen durch die Schaltungsanordnung reduziert werden.

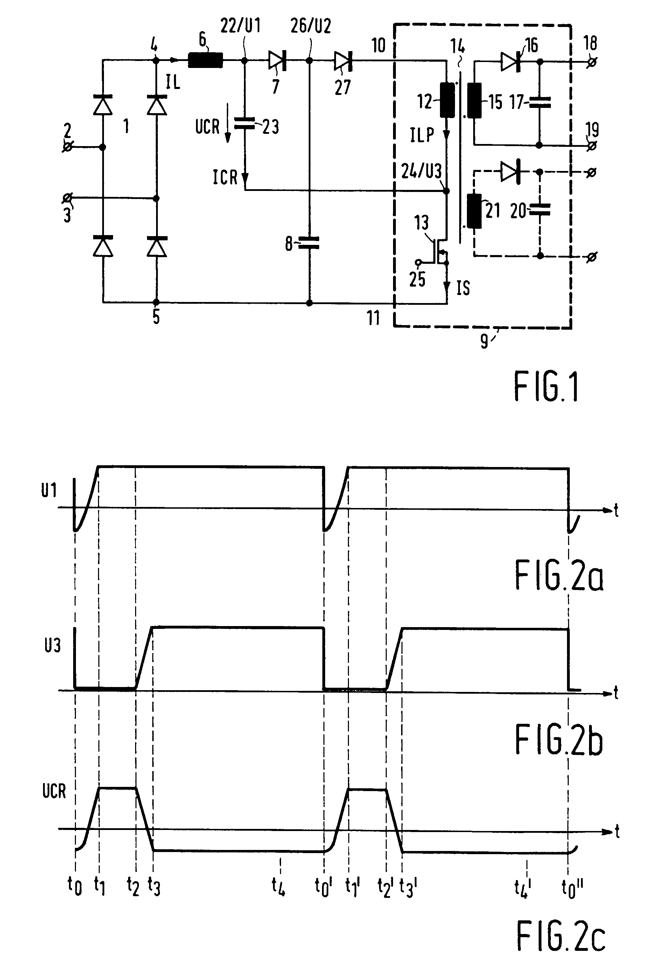

Die Schaltungsanordnung ist in Fig. 1 nochmals dargestellt. Fig. 2 zeigt charakteristische Spannungsverläufe für zwei Hochfrequenzschaltperioden. Wird der Hochfrequenzschalter 13 zum Zeitpunkt $t_2$ ausgeschaltet. dann bleibt der Strom ILP in der Primärseite des Transformators 12 wegen der Energieerhaltung konstant und fließt zunächst durch den Kondensator 23 und die Dioden 7 und 27. Wegen des praktisch konstanten Stromes ILP wird der Kondensator 23 umgeladen und zwar mit zeitlich linearem Spannungsverlauf. Weist die Kondensatorspannung UCR, die ja auch gleichzeitig an der Primärseite des Transformators anliegt, nun einen negativen Wert auf, dessen Betrag gleich der auf die Primärseite transformierten Ausgangsspannung des Transformators ist, dann wird die Ausgangsdiode 16 leitend und die im Transformator gespeicherte Energie kann an den Ausgangskondensator 17 abgegeben werden. In einer praktischen Schaltung wird der Transformator jedoch Streuinduktivitäten aufweisen, die dafür sorgen. daß die Abnahme des Stromes auf der Primärseite sowie der Anstieg des Stromes auf der Sekundärseite nicht in beliebig kurzer Zeit erfolgen kann, d.h. der auf der Primärseite noch kurzzeitig weiterfließende Strom wird den Kondensator 23 noch weiter negativ aufladen. Dies hat zur Folge, daß die an dem Hochfrequenzschaltelement 13 auftretende Sperrspannung sehr hoch werden kann und daß somit ein teures Bauelement mit einer entsprechenden Sperrspannung (zB. 800 V) verwendet werden muß. Aus diesem Grund wird sehr häufig die aus der eingangs genannten Literatur bekannte Schutzschaltung (voltage clamp) verwendet, die die Energie aus der Streuinduktivität übernimmt und in Wärme umwandelt.

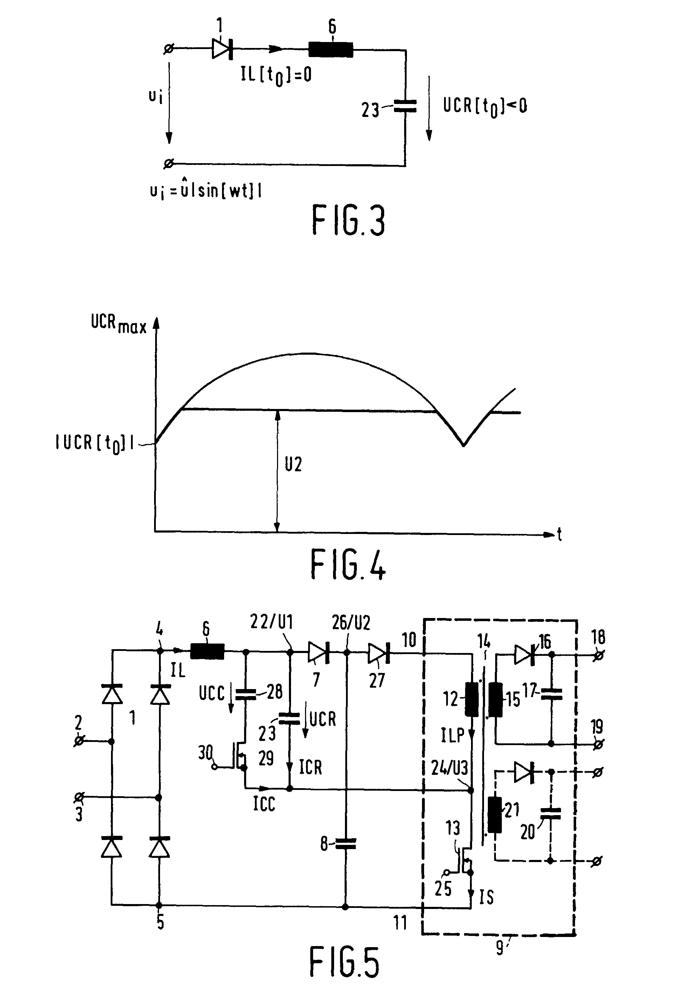

Einerseits reduziert nun diese Schutzschaltung den Gesamtwirkungsgrad des Schaltnetzteils und andererseits führt die Kombination mit der Schaltung aus Fig. 1 zu einem weiteren unerwünschten Problem, das im folgenden beschrieben wird. Zu diesem Zweck betrachten wir die Kurvenverläufe in Fig. 2. Wie bereits erläutert wird der Kondensator 23 nach dem Ausschalten des Hochfrequenzschalters 13 auf eine negative Spannung aufgeladen. Diese Spannung bleibt bis zum Beginn eines neuen Schaltzyklus erhalten. Wird jetzt der Hochfrequenzschalters 13 zum Zeitpunkt $t_o$ eingeschaltet, dann bilden die Spule 6 und der Kondensator 23 einen Resonanzkreis, der an die gleichgerichtete Netzeingangsspannung angeschlossen ist. Dieser Schaltungsteil ist in Fig. 3 nochmals separat dargestellt. Mit den Anfangsbedingungen $IL(t_o) = 0$ und $UCR(t_o) < 0$ kann der Spannungsverlauf UCR(t) durch folgende Gleichung beschrieben werden.

$$UCR(t) = [UCR(t_o) - u_i] * \cos(\omega t) + u_i$$

Als Maximalwert dieser Spannung erhält man für $\cos(\omega t) = -1$ den Wert

$$UCR_{max} = 2 * u_i - UCR(t_o) = 2 * u_i + |UCR(t_o)|$$

Beim Nulldurchgang der Netzwechselspannung, d.h. bei $u_i = 0$ kann die Kondensatorspannung aufgrund der Resonanz lediglich von einem anfangs negativen Wert auf einen positiven Wert gleicher Amplitude umschwingen. Mit steigender Netzspannung kann die Kondensatorspannung um den zusätzlichen Betrag $2 * u_i$ ansteigen. Der Gesamtverlauf dieser Funktion ist für eine komplette Netzhalbwelle in Fig. 4 als dünne Linie dargestellt. Überschreitet diese Gesamtspannung jedoch die Spannung U2 am Speicherkondensator 8, dann wird die Diode 7 leitend und die beiden Kondensatoren 23 und 8 werden parallel geschaltet. Wegen der sehr viel größeren Kapazität des Kondensators 8 wird die Spannung daher auf dem konstanten Wert U2 festgehalten.

Das eingangs angesprochene Problem liegt jetzt im Bereich der Netzspannungsnulldurchgänge. Hier erreicht die Spannung UCR einen Wert der unterhalb von U2 bleibt. Beim Ausschalten des Hochfrequenzschalters 13 zum Zeitpunkt $t_2$ kann die Sperrspannung U3 am Schalter durch einen Spannungsumlauf in der Schleife mit den Elementen 13, 23, 7 und 8 zu

$$U3 = U2 - UCR$$

berechnet werden, d.h. die Spannung am Schalter wird direkt von Null auf den Differenzbetrag zwischen den beiden Werten U2 und UCR springen. Erst oberhalb von diesem Wert wird eine Begrenzung der Anstiegsgeschwindigkeit der Sperrspannung am Schaltelement durch C23 stattfinden.

Die Erfindung hat die Aufgabe, die Schaltungsanordnung aus Fig. 1 derart zu modifizieren, daß die maximal am Hochfrequenzschalter auftretende Sperrspannung mit einer prinzipiell verlustlosen Schutzschaltung auf einen niedrigeren Wert, z.B. 600 V begrenzt werden kann und daß dabei gleichzeitig die begrenzte Anstiegsgeschwindigkeit der Spannung am Schaltelement unter allen Umständen, d.h. auch bei Netzeingangs-spannung gleich Null aufrechterhalten werden kann.

Diese Aufgabe wird erfindungsgemäß gelöst durch eine Schaltungsanordnung zum Erzeugen wenigstens einer Ausgangsgleichspannung aus einer wenigstens weitgehend sinusförmigen Eingangswechselspannung einer ersten Frequenz mit einer ersten Gleichrichteranordnung, der die Eingangswechselspannung zuführbar ist und der an einem Gleichspannungsausgang eine gleichgerichtete Spannung entnehmbar ist, einer ersten Induktivität, einer zweiten Gleichrichteranordnung und einer ersten Siebkapazität, die eine in dieser genannten Reihenfolge miteinander verbundene, parallel zum Gleichspannungsausgang angeordnete Reihenschaltung bilden, einem Schaltnetzteil mit zwei Eingangsanschlüssen, mit denen es parallel zur ersten Siebkapazität angeordnet ist und zwischen denen es eine Reihenschaltung aus einer zweiten Induktivität und einer Schaltvorrichtung aufweist, die mit einer zweiten Frequenz abwechselnd in den leitenden und in den gesperrten Zustand schaltbar ist und von dem die Ausgangsgleichspannung (en) abgebbar ist (sind), sowie einer ersten Steuerkapazität, durch die der Verbindungspunkt zwischen der ersten Induktivität und der zweiten Gleichrichteranordnung mit dem Verbindungspunkt zwischen der zweiten Induktivität und der Schaltvorrichtung verknüft ist sowie der Reihenschaltung aus einer zweiten Steuerkapazität und einer zweiten Schaltvorrichtung, die parallel zur ersten Steuerkapazität angeordnet ist, wobei die erste Induktivität und die erste Steuerkapazität derart bemessen sind, daß eine dadurch bestimmte Resonanzfrequenz größer als die zweite Frequenz ist und die letztere groß gegen die erste Frequenz gewählt ist und weiterhin die zweite Steuerkapazität groß gegenüber der ersten Steuerkapazität gewählt ist.

Bei der erfindungsgemäßen Schaltungsanordnung übernehmen die beiden Steuerkapazitäten nicht nur die Funktion des Hochsetzstellers zur Verminderung der niederfrequenten Verzerrungen des Netzstromes, sondern auch die Funktion der Dämpfung der von den Schaltvorrichtungen ausgehenden, hochfrequenten Störungen. insbesondere die Reduzierung der Anstiegsgeschwindigkeit der Spannung über den Schaltvorrichtungen beim Übergang in den nichtleitenden Zustand und auch die Begrenzung der maximal an den Schaltvorrichtungen auftretenden Sperrspannungen. Gegenüber den bekannten, dissipativen Dämfungsgliedern treten bei der erfindungsgemäßen Schaltungsanordnung auch keine ohmschen Verluste auf, so daß die Erwärmung der Schaltungsanordnung verringert und ihr Wirkungsgrad erhöht wird.

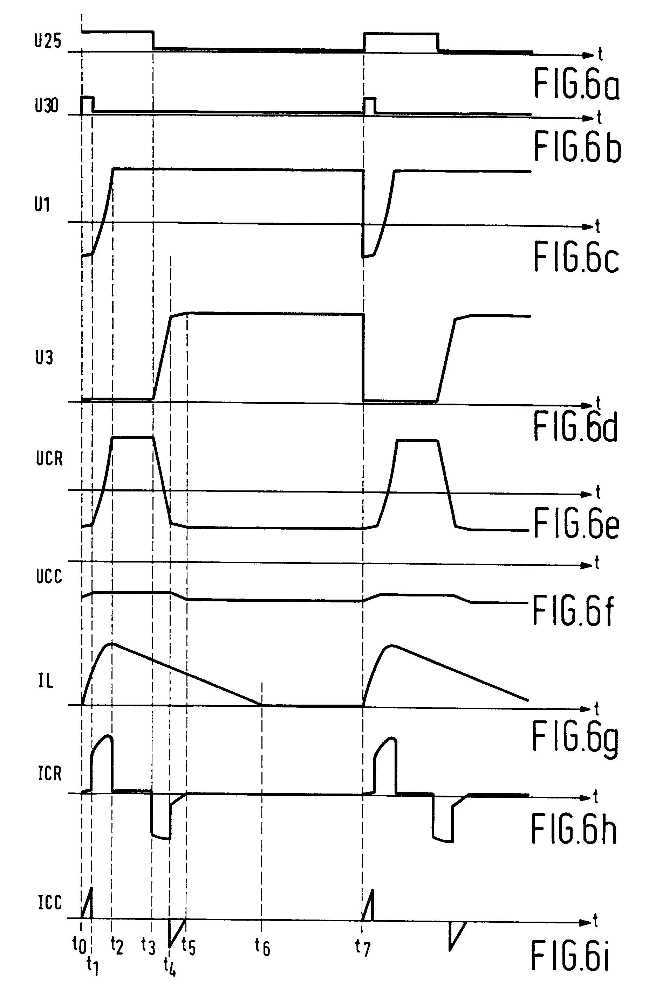

Die allgemeine Beschreibung der Funktionsweise dieser Schaltung entspricht im wesentlichen der Beschreibung der Schaltung in der Anmeldung DE-A-4 339 451 und kann von dort übernommen werden. Daher werden hier nur die Unterschiede infolge der beiden Komponenten 28 und 29 in Fig. 5 erläutert. Die zugehörigen Strom- und Spannungsverläufe sind in Fig. 6 zusammengestellt.

Beginnen wir mit dem Zeitpunkt $t_0$, bei dem der Hauptschalter 13 eingeschaltet wird. Zum gleichen Zeitpunkt wird auch der Schalter 29 eingeschaltet. Da die Spannungen UCR und UCC den gleichen negativen Wert aufweisen, erfolgt das Einschalten von 29 bei Nullspannung und es fliessen keine Ausgleichsströme zwischen den beiden Kondensatoren 23 und 28. Diese beiden Bauelemente sind für den nun folgenden Abschnitt $t_0$ bis $t_1$ parallelgeschaltet. Der resonante Strom IL fließt durch diese Parallelschaltung 23 und 28 und den Schalter 13. Die Aufteilung des Gesamtstromes IL auf die beiden Kondensatoren erfolgt proportional zur Kapazität der beiden Komponenten, d.h. der wesentlich größere Anteil des Stromes fließt durch den Kondensator 28. Durch die relativ große Gesamtkapazität der beiden Komponenten 23 und 28 wird die negative Spannung UCR = UCC zunächst nur langsam abnehmen. Zum Zeitpunkt $t_1$ wird der Schalter 29 ausgeschaltet, d.h. die Spannung UCC an 28 wird wird während der folgenden Zeitintervalle konstant bleiben. Bis zum Zeitpunkt $t_4$ in Fig. 6 verhält sich diese Schaltung analog zur Schaltung in Fig. 1. Der wesentliche Unterschied besteht bisher darin, daß durch die teilweise Umladung des Kondensators 28 ein zusätzlicher Strom in der Spule 6 hervorgerufen wird. Dadurch wird erreicht, daß für die Umladung des Kondensators 23 auf den Spannungswert U2 der Elkospannung genügend Energie in der Spule 6 vorhanden ist, d.h. auch beim Nulldurchgang der Netzspannung wird der positive Wert von UCR gleich U2 werden. Der eingangs beschriebene Sprung der Spannung an dem Schalter 13 unmittelbar nach dessen Ausschalten wird sicher vermieden.

Nach dem Ausschalten des Schalters 13 wird im Zeitbereich $t_3$ bis $t_4$ abhängig von dem Spitzenwert des Stromes ILP und der Größe des Kondensators 23 die Spannung U3 zeitlich begrenzt ansteigen. Zum Zeitpunkt $t_4$ erreicht die inzwischen negative Spannung UCR den Wert der Spannung UCC. Daher wird in diesem Moment die Inversdiode des MOSFET Schalters 29 leitend und die beiden Kondensatoren 23 und 28 liegen wieder parallel. Die Abnahme der Sperrspannung an dem Schalter 29 im Zeitintervall $t_3$ bis $t_4$ erfolgt mit der gleichen Geschwindigkeit wie der Spannungsanstieg von U3. Im Zeitbereich $t_4$ bis $t_5$ wird wegen der wesentlich größeren Gesamtkapazität der parallelgeschalteten Komponenten 23 und 28 die Spannung UCR = UCC nur noch sehr langsam ansteigen, d.h. die in der Streuinduktivität gespeicherte Energie führt nur noch zu einem sehr begrenzten Anstieg der Gesamtspannung über dem Schalter 13 und erlaubt daher die Verwendung eines MOSFET Schalters mit reduzierter Spannungsfestigkeit.

Diese Schaltung bietet mit der Einschaltdauer $t_1$ - $t_0$ des Schalters 29 einen weiteren Freiheitsgrad zur Optimierung. Die Mindesteinschaltdauer ist dadurch gegeben, daß genügend Energie in der Spule 6 gespeichert wird um den Kondensator 23 komplett umzuladen. Diese Dauer könnte jedoch maximal bis zum Zeitpunkt $t_3$, d.h. bis zur Einschaltdauer des Schalters 13 verlängert werden, wobei jedoch im Grenzfall (synchrones Schalten der beiden Schalter 13 und 29) wieder die gleichen Probleme wie in Fig. 4 beschrieben auftreten. Dennoch ergibt sich für die Festlegung des Zeitpunktes $t_1$ innerhalb des Bereiches von $t_0$ bis $t_3$ eine Regelmöglichkeit um z.B. die Spannung am Kondensator 8 konstant zu halten für Schwankungen der Eingangsspannung oder auch zum weiteren Reduzieren der Oberwellen des Netzstromes.

Nach dem Abklingen des Stromes ILP verhält sich die Schaltung in Fig. 5 im Zeitbereich t > t$_5$ wieder analog zur Schaltung in Fig. 1. Damit sind die Verbesserungen gegenüber der bisherigen Schaltung innerhalb eines Hochfrequenzschaltzyklus vollständig beschrieben.

## Patentansprüche

1. Schaltungsanordnung zum Erzeugen wenigstens einer Ausgangs-gleichspannung (an 18, 19) aus einer wenigstens weitgehend sinusförmigen Eingangs-wechselspannung (an 2, 3) einer ersten Frequenz mit einer ersten Gleichrichteranordnung (1), der die Eingangswechselspannung (an 2, 3) zuführbar ist und der an einem Gleichspannungsausgang (4, 5) eine gleichgerichtete Spannung entnehmbar ist, einer ersten Induktivität (6), einer zweiten Gleichrichteranordnung (7) und einer ersten Siebkapazität (8), die eine in dieser genannten Reihenfolge miteinander verbundene, parallel zum Gleichspannungsausgang (4 ,5) angeordnete Reihenschaltung bilden, einem Schaltnetzteil (9) mit zwei Eingangsanschlüssen (10, 11), mit denen es parallel zur ersten Siebkapazität (8) angeordnet ist und zwischen denen es eine Reihenschaltung aus einer zweiten Induktivität (12) und einer Schaltvorrichtung (13) aufweist, die mit einer zweiten Frequenz abwechselnd in den leitenden und in den gesperrten Zustand schaltbar ist und von dem die Ausgangsgleichspannung (en) (an 18, 19) abgebbar ist (sind), sowie einer ersten Steuerkapazität (23), durch die der Verbindungspunkt (22) zwischen der ersten Induktivität (6) und der zweiten Gleichrichteranordnung (7) mit dem Verbindungspunkt (24) zwischen der zweiten Induktivität (12) und der Schaltvorrichtung (13) verknüft ist sowie der Reihenschaltung aus einer zweiten Steuerkapazität (28) und einer zweiten Schaltvorrichtung (29), die parallel zur ersten Steuerkapazität (23) zwischen den Verbindungspunkten (22) und (24) angeordnet ist,
wobei die erste Induktivität (6) und die erste Steuerkapazität (23) derart bemessen sind, daß eine dadurch bestimmte Resonanzfrequenz größer als die zweite Frequenz ist und die letztere groß gegen die erste Frequenz gewählt ist und weiterhin die zweite Steuerkapazität (28) groß gegenüber der ersten Steuerkapazität (23) gewählt ist.

## Claims

1. A circuit arrangement for generating at least a DC output voltage (at 18, 19) from an at least substantially sine-shaped AC input voltage (at 2, 3) of a first frequency by means of a first rectifier arrangement (1) to which the AC input voltage can be applied (at 2, 3) and which has a DC output (4, 5) from which a rectified voltage is obtainable, a first inductance (6), a second rectifier arrangement (7) and a first filter capacitance (8) which, in this order, constitute a series arrangement connected parallel to the DC output (4, 5), a switched-mode power supply (9) having two input terminals (10, 11) with which it is arranged parallel to the first filter capacitance (8) and between which it comprises a series arrangement of a second inductance (12) and a switching device (13) which is alternately switchable in the conducting state and in the blocked state at a second frequency and from which the DC output voltage(s) is (are) obtainable (at 18, 19), as well as a first control capacitance (23) by which the junction point (22) between the first inductance (6) and the second rectifier arrangement (7) is combined with the junction point (24) between the second inductance (12) and the switching device (13), as well as the series arrangement of a second control capacitance (28) and a second switching device (29) which is arranged parallel to the first control capacitance (23) between the junction points (22) and (24),
the first inductance (6) and the first control capacitance (23) being dimensioned in such a way that a resonance frequency determined thereby is larger than the second frequency and the last-mentioned frequency is chosen to be large with respect to the first frequency, while the second control capacitance (28) is chosen to be large with respect to the first control capacitance (23).

## Revendications

1. Circuit de production d'au moins une tension continue de sortie (en 18, 19) à partir d'une tension alternative d'entrée (en 2, 3) du moins en grande partie sinusoïdale d'une première fréquence avec un premier dispositif redresseur (1) auquel peut être amenée la tension alternative d'entrée (en 2, 3) et auquel une tension redressée peut être prélevée à une sortie de tension continue (4, 5) une première inductance (6), un deuxième dispositif redresseur (7) et une première capacité de criblage (8) qui forment un circuit en série relié dans cet ordre précité et disposé parallèlement à la sortie de tension continue (4, 5), un élément du réseau de commutation (9) avec deux bornes d'entrée (10, 11) avec lesquelles il est disposé parallèlement à la première capacité de criblage (8) et entre lesquelles il présente un montage en série d'une première inductance (12) et d'un dispositif de commutation (13) qui peut être monté en alternance avec une deuxième fréquence à l'état conducteur et à l'état bloqué et par lequel la ou les tensions continues de sortie (18, 19) peuvent être prélevées ainsi qu'une première capacité de commande (23) par laquelle le point de jonction (22) entre la première inductance (6) et le deuxième dispositif redresseur (7) est relié avec le point de jonction (24) entre la deuxième inductance (12) et le dispositif de commutation (13) ainsi que le montage en série d'une deuxième capacité de commande (28) et d'un deuxième dispositif de commutation (29) qui est disposé parallèlement à la première capacité de commande (23) entre les points de jonction (22) et (24), la première inductance (6) et la première capacité de commande (23) étant dimensionnées de telle sorte qu'une fréquence de résonance ainsi déterminée est supérieure à la deuxième fréquence et cette dernière est choisie à une valeur élevée par rapport à la première fréquence et la deuxième capacité de commande (28) est choisie à une valeur élevée par rapport à la première capacité de commande (23).

FIG.1

FIG.2a

FIG.2b

FIG.2c

7

FIG.3

FIG.4

FIG.5

8

FIG.6a

FIG.6b

FIG.6c

FIG.6d

FIG.6e

FIG.6f

FIG.6g

FIG.6h

FIG.6i